# EUROPEAN PATENT SPECIFICATION

(11) **EP 0 677 085 B1**
(45) Date of publication and mention of the grant of the patent: **05.03.1997**
(21) Application number: 94900300.8
(22) Date of filing: 16.11.1993
(51) Int. Cl.: C08L 77/00

(54) **NEW POLYAMIDES RESIN COMPOSITION FOR AUTOMOBILE EXTERIOR**
POLYAMIDHARZZUSAMMENSETZUNG FÜR AUTOMOBILGEHÄUSE
NOUVELLE COMPOSITION DE RESINE POLYAMIDE UTILISEE COMME REVETEMENT EXTERIEUR POUR AUTOMOBILE

(30) Priority: 31.12.1992 KR 2752592
(43) Date of publication of application: 18.10.1995
(73) Proprietor: HYUNDAI MOTOR CO., LTD., Jongro-ku, Seoul 110-793 (KR); TONGYANG NYLON CO., LTD., Mapo-ku, Seoul 121-020 (KR)
(72) Inventor: PARK, Bong, Hyun, Ulsan Kyungsangnam-do 681-791 (KR); SOHN, Kwang, Ho, Ulsan Kyungsangnam-do 681-791 (KR); JEONG, Dong, Won, Anyang-si Kyungki-do 430-080 (KR); LEE, Kyung, Yoon, Anyang-si Kyungki-do 430-080 (KR)
(74) Representative: Viering, Jentschura & Partner
(86) International application number: KR9300101
(87) International publication number: WO9416016

(56) References cited:
- US-A- 4 778 848
- US-A- 4 966 941
- US-A- 4 977 216

## Description

### BACKGROUND OF THE INVENTION

This invention relates to new polyamide compositions for automobile exterior, more particularly, to polyamide compositions showing excellent impact strength, good thermal stability, light weight and good paintability, which are prepared by mixing crystalline polyamide with amorphous polyamide, thermoplastic elastomer and fluoropolymer.

In recent, the automobile parts tend to switch over from metals to plastics in order to reduce the body weight. design freely, simplify manufacturing process and so forth.

In particular, as polyamide resins (in general, polyamide-6 and polyamide-66) not only have superior mechanical properties such as strength, modulus, toughness and abrasion resistance, but also show good thermal stability, oil resistance, chemical resistance and excellent moldability, polyamide resins are applied to automotive parts such as radiator tank, engine cover, heater tank, gear shift housing, canister, radiator fan and the like.

And the trend accelerated more, besides the interior or engine functional parts aforementioned, plastics tend to be applied to automotive large exterior parts such as fender, door panel, spoiler, wheel cover, bumper and the like.

However, these large exterior parts require to have the following properties : the impact strength resistable the change of outside circumstances factors (temperature, humidity, outside impact or collision.); the thermal stability resistable painting process of high temperature and/or heat occured by high speed driving ; the moldability able to flow and mold till mold of 2mm thickness cavity ; and the good dimensional & mechanical stability by low moisture absorption in wet condition (low dimensional, mechanical properties's fluctuation).

Us Patent No. 4988764, Japan Patent Puhlication No. 60-49018, -86161, -86162, -179455, -262853 and -210660 disclose polymer compositions consisting of polyamides and polyolefins. The above patents have been claimed good dimensional stability by control of moisture absorption, but those have worse thermal stability.

British Patent No. 387903 & No. 327978 and German Patent No. 3827668 disclose crystalline polyamide and polylelin compositions reinforced by inorganic filler, which have relatively better thermal stability, modulus and dimensional stability.

However, those patents have insufficient impact strength, surface gloss and moldability, and relatively heavy weight by increased density.

US Patent No. 4923924, British Patent No. 295103 and German Patent No. 3834912 disclose the modified polyphenylene oxide or the modified polyphenylene ether compositions having relatively good impact strength, paintability and thermal stability, but they have very poor-flowability, light stability and worse chemical resistance. Therefore, they have limits to apply to exterior materials of automotive.

US Patent No. 2696482 discloses amorphous polyamides prepared by condensation of bis(4-aminocyclohexyl)-methane with isophthalic acid, and US Patent No. 3597400 discloses amorphous polyamides consisting of bis(4-aminocyclohexyl)methane, hexamethylene diamine, isophthalic acid and terephthalic acid.

US-A-4 778 848 discloses mixtures of 65-97 polyamide (A), 3-5 wt% graft rubber (B) and 0,1-1 wt% tetrafluoroethylene based upon the sum of (A) and (B).

However, due to very high melt viscosity, those amorphous polyamides have very poor flowability and moldability.

Also, polymer blends (alloy) prepared by mixing and extruding the above amorphous polyamide with thermoplastic elastomer have relatively poor flowability and moldability.

Therefore, the inventors of this invention put an effort to solve these problems of the old technology, and as a result of that, finished the preferred compositions of this invention which show wonderful impact strenth, thermal stability, flowability, surface gloss, paintability, light stability, chemical resistance, and light weight, which are prepared by mixing crystalline polyamide with amorphous polyamide, thermoplastic elastomer, and a fluoropolymer.

### SUMMARY OF THE INVENTION

An objective of this invention is to provide polyamide compositions for automotive exterior materials, showing wonderful impact strenth, thermal stability, flowability, surface gloss, paintability, light stability, chemical resistance, and light weight.

The compositions of this invention are polyamide compositions for automotive exterior materials comprising, in percent by weight(wt%);
(a) 30 to 90 wt% crystalline polyamide ;
(h) 3 to 50 wt% amorphous polyamide ;
(c) 5 to 30 wt% thermoplastic elastomer ; and
(d) 0.1 to 10 wt% fluoropolymer, based on a total of 100wt% for components (a) through (d).

### DETAILED DESCRIPTION OF THE INVENTION

The polyamides compositions of this invention comprise, in percent by weight : (a) 30 to 90wt% crystalline polyamide ; (b) 3 to 50wt% amorphous polyamide ; (c) 5 to 30wt% thermoplastic elastomer and (d) 0.1 to 10wt% fluoropolymer, based on a total of 100wt% for components (a) through (d), which are used for automotive exterior materials, showing excellent impact strength, thermal stability, flowability, surface gloss, paintability, light stability, chemical resistance, and light weight.

The crystalline polyamides suitable for use in the compositions of this invention are those polymers commonly known by the generic term, nylon, characterized by the presence of recurring amide groups as an integral part of the polymer chain.

Included are the various polyamide homopolymers or copolymers, as well as blends thereof, containing more than 80wt% by weight hexamethylene diamine and adipic acid of total crystalline polyamide components, prepared by condensation of one or more components selected from C₆-C₁₅ aliphatic diamine & aliphatic dicarbonic acid mixture, C₆-C₁₅ lactam or amino acid

The crystalline polyamides are used in the range of 30 to 90wt%, for increasing moldability, flowability and thermal stability.

In case of less than 30wt% cystalline polyamide, poor moldability due to low melt viscosity and in case of more than 90wt%, the impact strength and the dimensional stability are reduced.

Typically used is polyamide-66 (nylon-66) derived by condensation of hexamethylene diamine with adipic acid, but to improve more flexibility, toughness, and moldability, it is possible to use polyamide copolymers by condensation of hexamethylene diamine & adipic acid with less than 20wt%, ε-caprolactam, or polyamide blends of polyamide-66 with less than 20wt% polyamide-6 : to use polyamide copolymers by condensation of more than 80wt% hexamethylene diamine & adipic acid mixture with less than 20wt%, of another components :
for example, C₆-C₁₅ aliphatic diamines such as octamethylene diamine, nonamethylene diamine, decamethylene diamine, undecamethylene diamine, or dodecamethylene diamine and C₆-C₁₅ aliphatic dicarbonic acid such as azelaic acid, sheric acid, sebacic acid, dodecanoic acid, or C₆-C₁₅ lactam (or amino acid) such as ω-laurolactam, 11-aminoundecanic acid, 12-aminododecanic acid.

The above crystalline polyamides may be typically listed as follows:
polyamide-66 (or nylon-66) prepared by condensation of hexamethylene diamine and adipic acid in equimolar ratio ; polyamide-66 copolymers such as polyamide-66/6, polyamide-66/610, polyamide-66/612, polyamide-66/11, polyamide-66/12, polyamide-66/6/610, polyamide-66/6/612; polyamide mixtures such as polyamide-66/polyamide-11, polyamide-66/polyamide-12, polyamide-66/polyamide-69), polyamide-66/polyamide-66/6, polyamide-66/polyamide-66/612, and then the crystalline polyamide must comprise more than 80w% hexamethylene diamine & adipic acid, or more than 80wt%, polyhexamethylene adipamide (polyamide-66, nylon-66) polymerized from hexamethylene diamine & adipic acid.

If it is less than 80wt%, the thermal stability and the mechanical properties are reduced.

Used in this invention are amorphous polyamides for improving the thermal stability, the impact strength, the low moisture absorption and dimensional stability and the like, which are polymerized from the alicyclic diamines of the following structural formula(I), isophthalic acid, terephthalic acid, and C₆-C₁₅ aliphatic diamines & dicarbonic acids, C₆-C₁₅ lactams or amino acid, and includes more than 5mole% of one or more components selected from the alicyclic diamines of formula(I), isophthalic acid, terephthalic acid, in the amorphous polyamide of this invention. 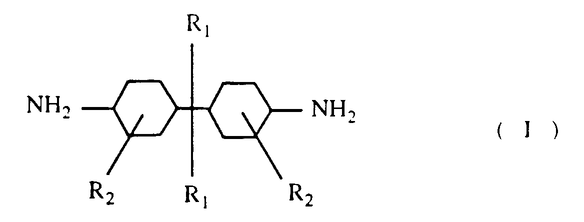 wherein,
R₁ = R₂ or R₁ ≠ R₂ ;
R₁ and R₂ can he hydrogen or C₁- C₃ alkyl group.

In this invention amorphous polyamides are used in the range of 3 ∼ 50wt%, base on a total of 100wt% for all components.

As amorphous polyamides have high melt viscosity and high material cost, when the amorphous polyamides are more than 50wt%, the flowability and moldability of the composition is reduced rapidly and the material cost is increased.

Also, when the amorphous polyamide is less than 3wt%, the adding effect could not he expected.

The alicyclic diamines of the above formula(I) are illustrated as follows :
Bis(4-Aminocyclohexyl)methane,
Bis(4-Amino-2-methylcyclohexyl)methane,
Bis(4-Amino-3-methylcyclohexyl)methane,
Bis(4-Amino-2-ethylcyclohexyl)methane,
Bis(4-Amino-3-ethylcyclohexyl)methane,
Bis(4-Amino-2-propylcyclohexyl)methane,
Bis(4-Amino-3-propylcyclohexyl)methane,
Bis(4-Amino-2-isopropylcyclohexyl)methane,
Bis(4-Amino-3-isopropylcyclohexyl)methane,
Bis(4-Aminocyclohexyl)propane,
Bis(4-Amino-2-methylcyclohexyl)propane,
Bis(4-Amino-3-methylcyclohexyl)propane,
Bis(4-Amino-2-ethylcyclohexyl)propane,
Bis(4-Amino-3-ethylcyclohexyl)propane,
Bis(4-Amino-2-propylcyclohexyl)propane,
Bis(4-Amino-3-propylcyclohexyl)propane,
Bis(4-Amino-2-isopropylcyclohexyl)propane,
Bis(4-Amino-3-isopropylcyclohexyl)propane.

Usually, the alicyclic diamines are obtained as the mixture of geometric isomers such as trans-trans, cis-trans, cis-cis, which are formed between amino group and carbon atom in 1,4-position of cyclohexane ring produced by the addition of hydrogen to the aromatic ring.

Usually, the more the amount of trans-trans structure in the alicyclic diamines, the higher the glass transition temperature(Tg) and the thermal stability of the amorphous polyamide, but the more the amount of cic-cis structure, the lower is the glass transition temperature(Tg) and the thermal stability.

Therefore, the ratio of isomers may be controlled preferably, depending on requirements of usage.

The above alicyclic diamines may he applied dependently or indepentdently in this invention. For example, it can be used as mixed mixture with one or more monomer(s) selected from C₆-C₁₅ aliphatic diamine monomers such as hexamethylene diamine, 2,2,4-trimethylhexamethylene diamine, 2,4,4-trimethylhexamethylene diamine, heptamethylene diamine, octamethylene diamine, nonamethylene diamine. decamethylene diamine, undecamethylene diamine, dodecamethylene diamine, and also, to control the glass transition temperature flowability, transparency, and chemical resistance, may be used as mixed with small quantity of another alicyclic or aromatic diamine monomers such as 3-aminomethyl-3,3,5-trimethylcyclohexyl amine, 2,5-bis(aminomethyl)novonane, isophorone diamine, 1,4-diaminomethylcyclohexane, m-xylene diamine, or p-xylene diamine.

The dicarbonic acid monomers which can be applied in equimolar ratio with the diamine monomers, are listed as the followings :
the C₆-C₁₅ aliphatic dicarbonic acids such as adipic acid, azelaic acid, sberic acid, sebacic acid, decanoic acid, undecanoic acid, 2,2,4-trimethyladipic acid, 2,4,4,-trimethyladipic acid, aromatic dicarbonic acids such as isophthalic acid, or terephthalic acid.

And it may be possible to use together with the small quantity of another alicyclic dicarbonic acids such as 1,3-cyclohexanedicarboxylic acid, 1,4-cyclohexanedicarboxylic acid, to control the glass transition temperature, flowability, transparency or chemical resistance.

And also, it is possible to use together with another components such as C₆-C₁₅ lactams or amino acids : ε-caprolactam. ω-laurolactam, 6-aminocapronic acid, 11-aminoundecanic acid, or 12-amonododecanic acid.

According to this invention, more than 5mole% of one or more components selected rom the alicyclic diamines of the formula(I), isophthalic acid, terephthalic acid, based on the amorphous polyamide component is included in said component.

When it is less than 5mole%, the thermal stability of the amorphous polyamide is not effective.

The thermoplastic elastomer is used in this invention to increase the impact strength against physical collision or hying gravel at low temperature (-30 ∼ -40°C ) and includes ethylene thermoplastic elastomer grafted with α ,β-unsaturated acid unhydride or its derivative(s) ; the compounds obtained by the addition polymerization of ehtylene with one or more monomers selected from the group consisting of C₃-C₈ of olefins, acrylic acids or their derivatives, vinyl monomers and less than 10 mole% of diene monomers. The thermoplastic elastomers are used in the range of 5 ∼ 30wt%. When the amount of the thermoplastic elastomer is less than 5wt%, the increasing effect of the impact resistance at low temperature is very low, and when it is more than 30wt%, the thermal stability is reduced suprisingly and the moldability is also reduce, because of the reduced flowability.

The above C₃-C₈ olefins may include propylene, butylene, butadiene, 1-pentene, isobutylene, 4-methyl-1-pentene, isoprene, 1-hexene, 1,3-hexadiene, 1,4-hexadiene or 1-heptene, and the acrylic acids & their derivatives may include methyl acrylate, ethyl acrylate, butyl acrylate, octyl acrylate, 2-ethylhexyl acrylate, glycidyl acrylate, methyl methacrylate, ethyl methacrylate, 2-ethylhexyl methacrylate, hydroxyethyl methacrylate, aminoethyl methacrylate, glycidyl methacrylatc, acrylic acid, methacrylic acid and metal salts of acrylate and metacrylate.

And, the above vinyl monomers may include stylene, α-methylstylene, acrylonitrile, vinyl chloride, and the above diene monomers may include 1,3-cyclohexadiene, 1,4-cyclohexadiene, butadiene, cyclopentadiene, 1,3-pentadiene, 2,4-hexadiene, 2,5-novonadiene, 2-ethyl-2,5-novonadiene, 2-(1'-propenyl)-2-novonene.

As described, the well-known thermoplastic elastomer may be illustrated generally as the followings : for example, ethylene-propylene copolymer, ethylenepropylene-diene copolymer, styrene-ethylene-butylene-styrene copolymer, ethylene-ethylacrylate copolymer, in particular copolymer elastomers, from ethylene, propylene and diene monomer, grafted with α ,β-unsaturated acid anhydride.

The above α ,β-unsaturated acid anhydride, α ,β-unsaturated acid or their derivatives may be illustrated typically as maleic anhydride, itaconic anhydride, citraconic anhydride, acrylic acid, methacrylic acid, maleic acid, methylmaleic acid, fumalic acid, methylfumalic acid, ethylfulmalic acid, dimethyl malate, diethyl malate.

In this invention the fluoropolymer is used for improving the surface gloss and the paintahility. The fluoropolymers are obtained by addition polymerization with the following fluoro compounds and olefins : 40 ∼ 100 wt% of fluoro compounds which come from the following formula(II) : 0 ∼ 60 wt% of C₂-C₈ olefins of one or more selected from the group consisting of ethylene, propylene, butylene, butadiene, 1-pentene, isobutylene, 4-methyl-1-pentene, isoprene, 1-hexene, 1,3-hexadiene, 1,4-hexadiene and 1-heptene.

In this invention, the fluoropolymers are used in the range of 0.1 ∼ 10 wt%. If the fluoropolymer is less than 0.1 wt%, it is hard to expect the addition effect, and if it is more than 10 wt%, the material cost is increased and the flowability & moldability are reduced. 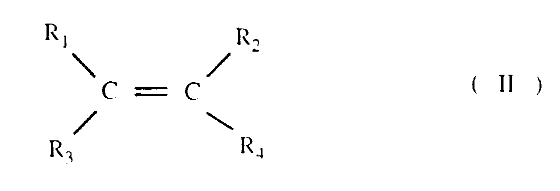 wherein,
R₁, R₂ and R₃ are H or F ;
R₄ is F, Cl, CF₃ or CF₂CF₃ ; and
at least, one should be a fluoro group among the R₁, R₂, R₃ and R₄.

The said fluoropolymer may be illustrated typically as the followings polytetrafluoroethylene(PTFE) ; the copolymer(FEP) from tetrafuoroethylene(TFE) and hexafluoropropylene(HFP); polychlorotrifluoroethylene(PCTFE); polyvinylidenefluoride(PVDF); the copolymer(ETFE) from tetrafluoroethylene(TFE) and ethylene ; the copolymer(ECTFE) from chlorotrifluoroethylene(CTFE) and ethylene ; the copolymer(VDF/HFP) from vinylidene fluoroide(VDF) and hexafluoropropylene(HFP); the copolymer(VDF/PFP) from VDF and pentafluoropropylene(PFP); the copolymer(VDF/HFP/PFP) from VDF, HFP and PFP ; the copolymer(VDF/HFP/TFE) from VDF, HFP and TFE ; the copolymer(VDF/PFP/TFE) from VDF, PFP and TFE ; the copolymer(VDf/CTFE) from VDF and CTFE ; and the copolymer from TFE and propylene.

The polyamide compositions of this invention can comprise another plastic additives : aromatic amine stabilizer, nickel stabilizer, hindered phenol stabilizer, phosphorous stabilizer and sulfur stabilizer as processing stabilizer, thermal stabilizer. light stabilizer and ageing stabilizer, and plastic additives such as pigment, dye, nucleating agent, inorganic filler, surfactant, dispersing agent, lubricant, mold releasing agent, plasticizer, polishing agent.

The polyamide compositions prepared by this invention have excellent impact strength, thermal stability, moldability, surface gloss, paintability and light weight(reducing the body weight).

Therefore, this composition is very useful in a wide variety of exterior plastic material for automobiles.

This invention is illustrated in detail as the following examples. Also, the inventors of this invention want to indicate that this invention is not restricted only to those Examples.

The crystalline polyamide, the amorphous polyamide and the thermoplastic elastomer used on the following Examples and comparisions are as the followings :
A. Crystalline Polyamide
   (a-1) Crystalline polyamide I (C-PAI) ;
      This polymer consists of hexamethylene diamine and adipic acid in equimolar ratio, and its relative viscosity is 2.6 in 95% sulfuric acid at 25°C and melting point is 260°C.
   (a-2) Crystalline polyamide II (C-PAII) ;
      This polymer consists of 90 wt% of mixture of hexamethylene diamine and adipic acid in equimolar ratio and 10 wt% of ε-caprolactam, and its relative viscosity is 2.7 in 95% sulfuric acid at 25°C and melting point is 240°C.
B. Amorphous Polyamide
   (b-1) Amorphous polyamide I (A-PAI) ;
      This polymer consists of 40 mole% bis(4-aminocyclohexyl)propane, 15 mole% isophthalic acid, 5 mole% terephthalic acid, and 30 mole% azelaic acid. The melt viscosity(280°C, 5000 sec⁻¹) is 5600 poise and the glass transition temperature(Tg) is 180°C.
   (b-2) Amorphous polyamide II (A-PAII) ;
      This polymer consists of 40 mole% bis(4-amino-3-methyl-cyclohexyl)-methane, 40 mole% adipic acid and 20 mole% of ω-laurolactam. The melt viscosity(280°C, 5000 sec⁻¹) is 7500 poise and the glass transition temperature is 146°C.
   (b-3) Amorphous polyamide III (A-PAIII) ;
      This polymer consists of 35 mole% of the mixture of 2,2,4- and 2,4,4-trimethylhexa-methylenediamine(equimolar ratio), 15 mole% hexamethylene diamine and 50 mole% terephthalic acid. The melt viscosity(280°C, 5000 sec⁻¹) is 6000 poise and the glass transition temperature is 155°C.
C. Thermoplastic Elastomer
   (c-1) Thermoplastic elastomer (TPE I) ;
      This is ethylene-propylene copolymer grafted with 1.0 wt% maleic acid anhydride, and its trade name is Exeller 1801, 1803 (Product of Exxon Chemical Co., Belgium).
   (c-2) Thermoplastic elastomer (TPE II) ;
      This is a block copolymer, consisting of 72 wt% ethylene/1-butene copolymer and 28 wt% polystyrene, grafted with 2 wt% anhydride. The trade name is Kraton FG-1901 X (Product of Shell Chemical Co., U.S.A.),

### EXAMPLE 1 ∼ 9

According to mixing ratios of the following Table 1, crystalline polyamide, amorphous polyamide, thermoplastic elastomer and fluoropolymer were dry-mixed in HENSELL mixer, and the mixture was melt-blended in twin-screw extruder(screw diameter 30mm, L/D=30) to obtain resin pellets.

Then, the melting temperature was 270 ∼ 300°C, the rotating rate of screw was 250 RPM, and the extrusion rate of the compositions was 25kg/hr.

The resulting pellets were dried in nitrogen sealing oven for 6 hours at 120°C so that the water content was less than 0.1%, and test specimens were made by injection molding method.

The various properties of test specimens were measured and listed in Table 2.

### COMPARISON 10 ∼ 17

The procedures of Example I were repeated according to mixing ratios of the following Table 1. The proportion of comparison 16 and 17 were respectively changed to talc and kaoline in return for the amorphous polyamide to compare their characteristics with polyamide composition reinforced by an inorganic filler.

### COMPARISON 18

Trade name NORYL GTX 901 made by General Electric Co. in U.S.A. was dried for 6 hours in nitrogen sealing oven at 120°C so that the water content was less than 0.03%, and test specimens were made by injection molding method.

The resulted test specimen was measured for various properties shown in Table 2.

**Table 1.**

| section | crystalline polyamide | | amorphous polyamide | | thermoplastic elastomer | | fluoropolymer | |
|---|---|---|---|---|---|---|---|---|
| | species | wt% | species | wt% | species | wt% | species | wt% |
| Example 1 | C-PAI | 64 | A-PAI | 20 | TPEI | 15 | ETFE⁽¹⁾ | 1.0 |
| Example 2 | C-PAI | 64 | A-PAII | 20 | TPEI | 15 | ETFE | 1.0 |
| Example 3 | C-PAI | 64 | A-PAIII | 20 | TPEI | 15 | ETFE | 1.0 |
| Example 4 | C-PAI | 64 | A-PAI | 20 | TPEII | 15 | ETFE | 1.0 |
| Example 5 | C-PAI & C-PAII | 44 20 | A-PAI | 20 | TPEI | 15 | ETFE | 1.0 |
| Example 6 | C-PAII | 64 | A-PAI | 20 | TPEI | 15 | ETFE | 1.0 |
| Example 7 | C-PAII | 64 | A-PAII | 20 | TPEII | 15 | ETFE | 1.0 |
| Example 8 | C-PAI | 63 | A-PAI | 20 | TPEI | 15 | FEP⁽²⁾ | 2.0 |
| Example 9 | C-PAI | 63 | A-PAII | 20 | TPEI | 15 | ETFE | 2.0 |
| Comparison 10 | C-PAI | 84 | ---- | -- | TPEI | 15 | ETFE | 1.0 |
| Comparison 11 | C-PAI | 65 | A-PAI | 20 | TPEI | 15 | ---- | --- |
| Comparison 12 | C-API | 79 | A-API | 20 | ---- | -- | ETFE | 1.0 |
| Comparison 13 | ---- | -- | A-PAI | 84.0 | TPEI | 15 | ETFE | 1.0 |
| Comparison 14 | ---- | -- | A-PAII | 84.0 | TPEI | 15 | ETFE | 1.0 |
| Comparison 15 | ---- | -- | A-PAIII | 84.0 | TPEI | 15 | ETFE | 1.0 |
| Comparison 16 | C-API | 60 | TALC | 25 | TPEI | 15 | ---- | --- |
| Comparison 17 | C-API | 60 | KAOLIN | 25 | TPEI | 15 | ---- | --- |

| | | | | | | | | |
|---|---|---|---|---|---|---|---|---|
| Note (1) ETFE is a copolymer of ethylene and tetrafluoroethylene(TFE), and its trade name is HALON ET 101 of AUSIMONT CO. in U.S.A. | | | | | | | | |
| (2) FEP is a copolymer of TFE and hexafluoropropylene(HFP) prepared by Mitsui FLUOROCHEMICAL CO. in Japan. | | | | | | | | |

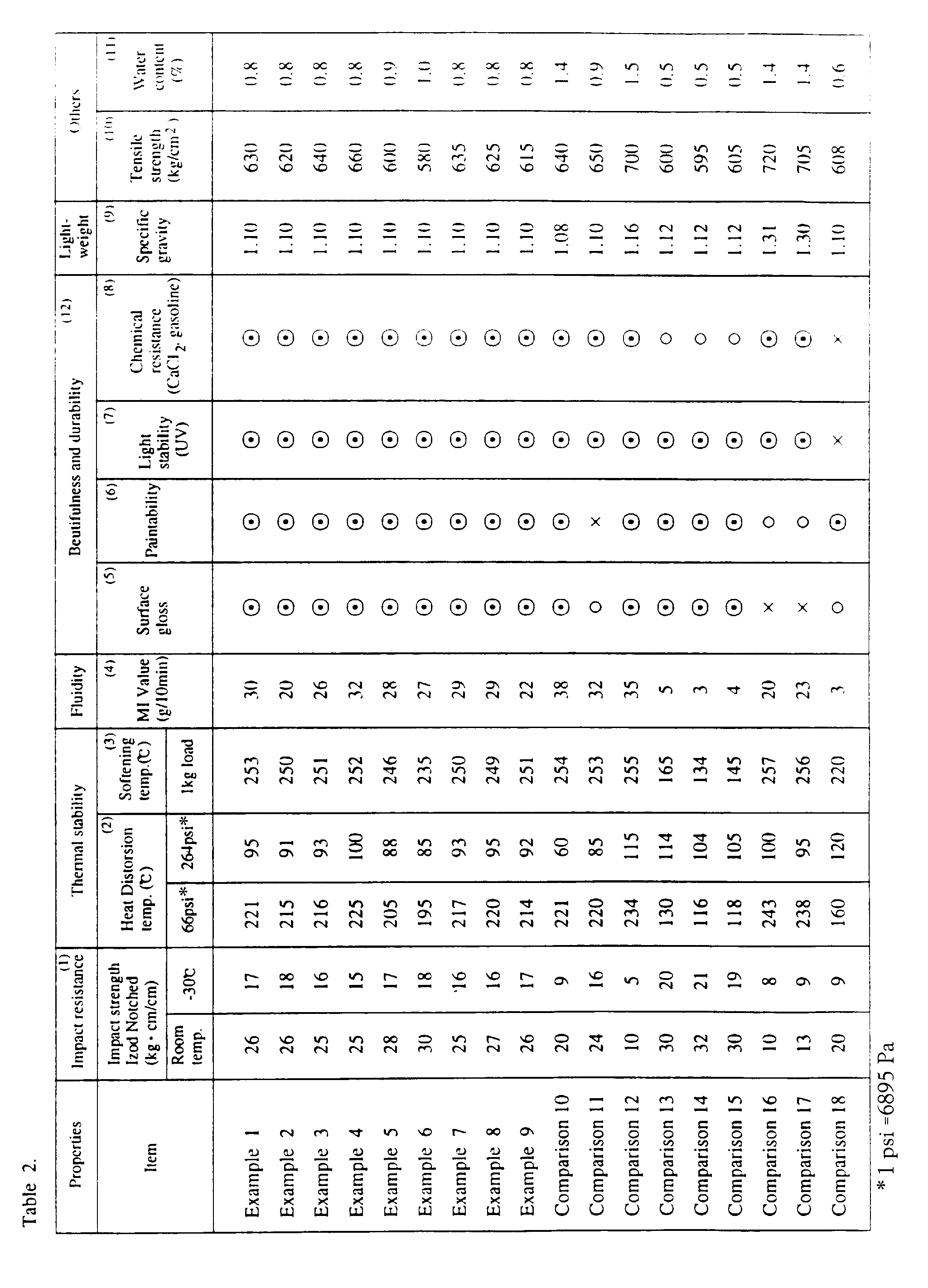

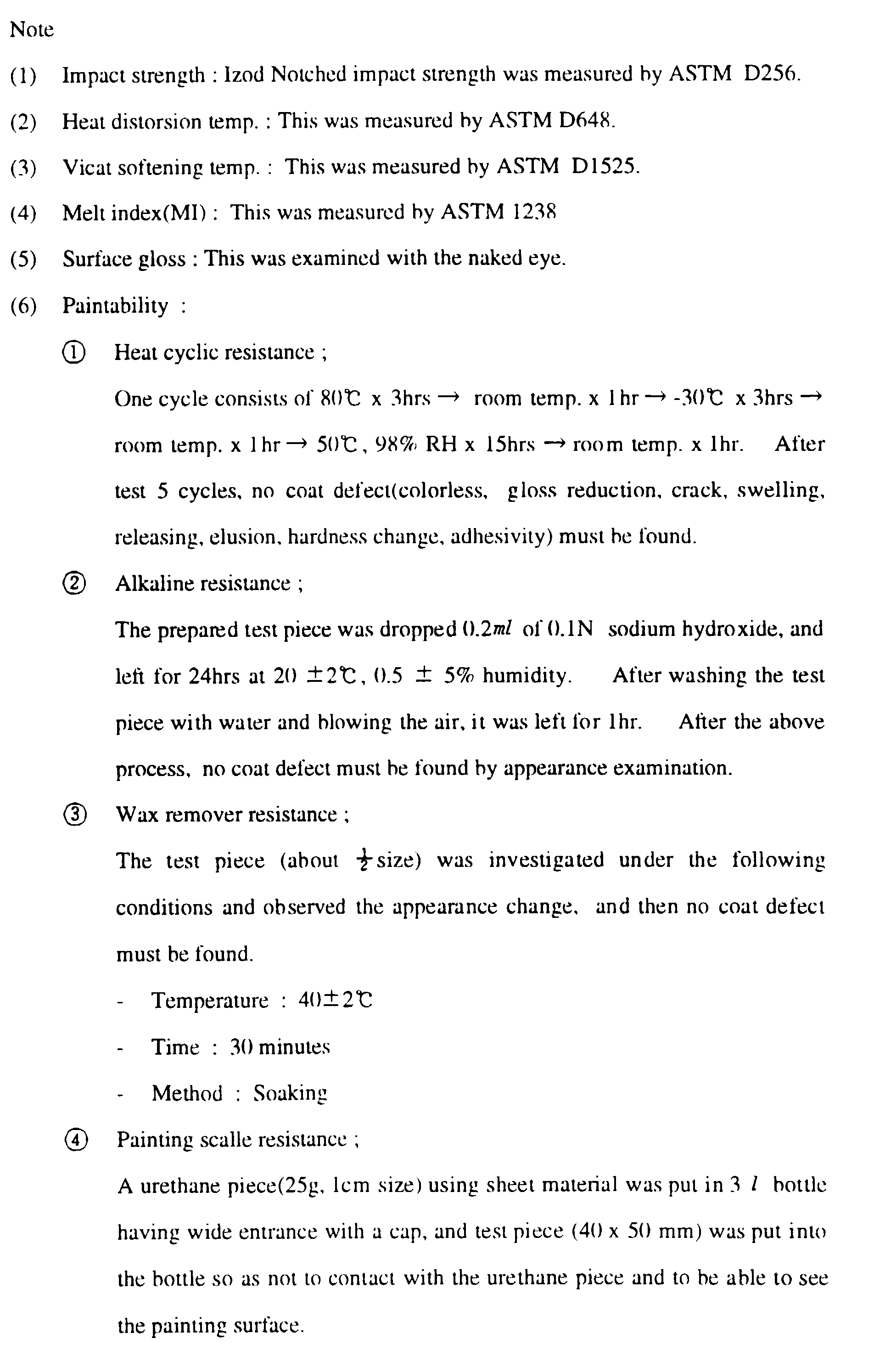

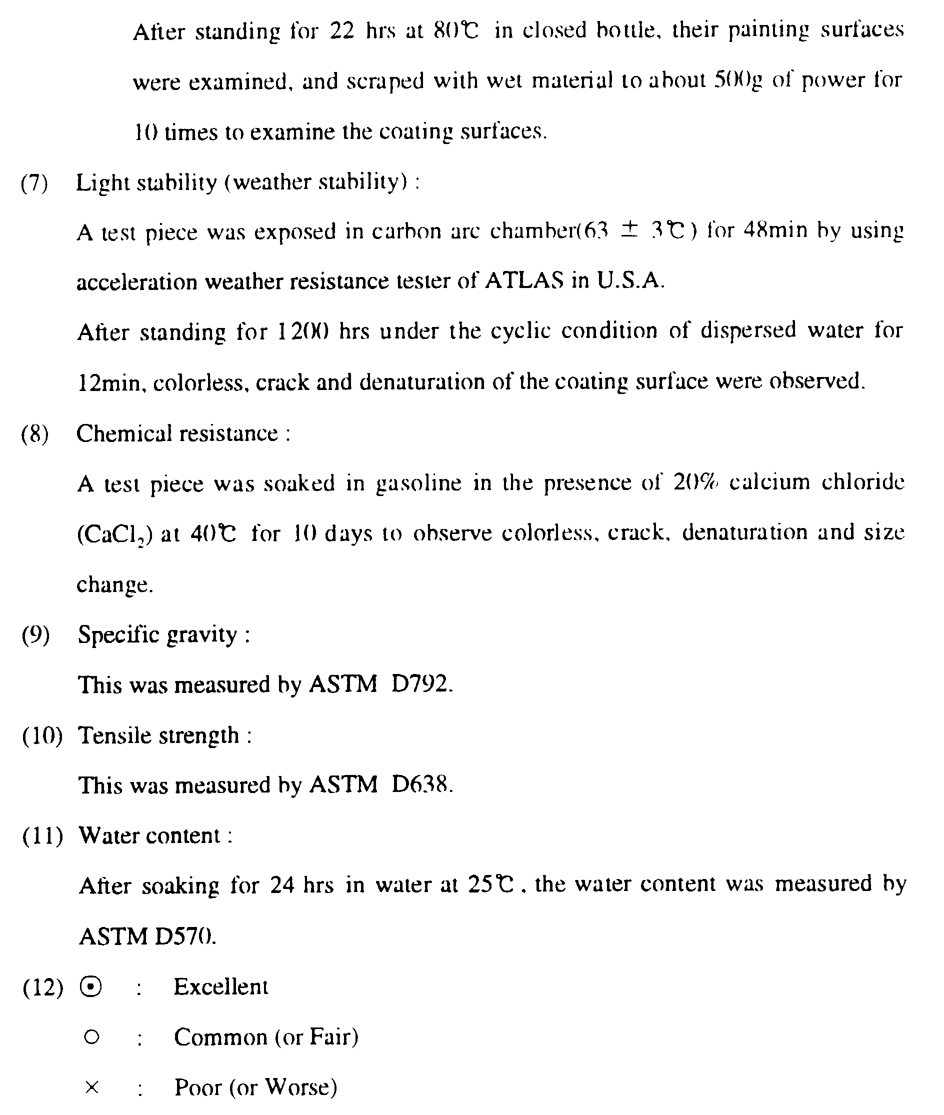

## Claims

1. The polyamide compositions for exterior material of automobiles comprising, in percent by weight (wt%) ;
(a) 30 ∼ 90 wt% of crystalline polyamide,
(b) 3 ∼ 50 wt% of amorphous polyamide,
(c) 5 ∼ 30 wt% of thermoplastic elastomer and
(d) 0.1 ∼ 10 wt% of fluoropolymer, based on total of 100wt% for components (a) through (d).

2. The polyamide compositions defined as the claim 1, wherein the above crystalline polyamide is a polyamide copolymer prepared by condensation of one or more components selected from C₆ ∼ C₁₅ aliphatic diamines and C₆ ∼ C₁₅ aliphatic dicarboxylic acids and/or C₆ ∼ C₁₅ lactam or amino acid, or a mixture of polyamides, and includes more than 80 wt% of hexamethylene diamine and adipic acid.

3. The polyamide compositions defined as the claim I to 2, wherein the said amorphous polyamide is obtained by condensation of components selected from C₆ ∼ C₁₅ of aliphatic diamine, alicyclic diamine of the following formula(I), C₆ ∼ C₁₅ of aliphatic dicarboxylic acid, isophthalic acid, terephthalic acid and C₆ ∼ C₁₅ of lactam and/or amino acid, and includes more than 5 mole% of formula(I), isophthalic acid or terephthalic acid. 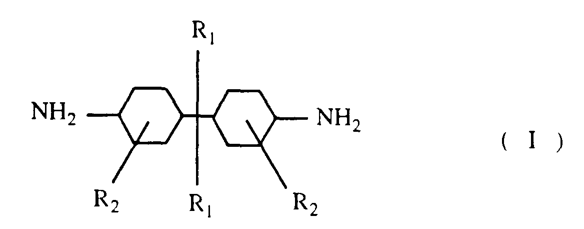 wherein,
R₁ and R₂ are hydrogen or C₁ ∼ C₃ alkyl group.

4. The polyamide resin composition defined as the claim 1 to 3, wherein said thermoplastic elastomer is obtained by an addition polymerization of ethylene and one or more selected from the group consisting of C₃ ∼ C₈ of olefins or acrylic acids or their derivatives, vinyl monomers and diene monomers corresponding to less than 10 mole%.

5. The polyamide compositions defined as the claim 1 to 4, wherein the said fluoropolymer is obtained by an addition polymerization from 40 ∼ 100 wt% of fluoro compounds of which one or more is selected from the group of the compound of the following structural formula(II), and 60 ∼ 0 wt% of olefin compounds of which one or more is selected from the group of C₂ ∼ C₈ olefins. 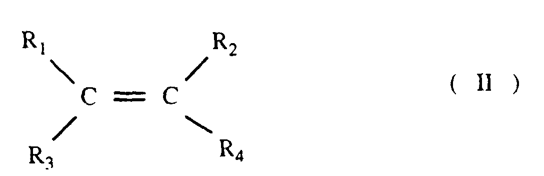 wherein,
R₁, R₂ and R₃ are H or F ;
R₄ is F, Cl, CF₃ or CF₂CF₃ ; and
at least, one should be a fluoro group among the R₁, R₂, R₃ and R₄.

6. The polyamide compositions defined as the claim 5, wherein the said olefin compounds are selected from the group consisting of ethylene, propylene, butylene, butadiene, 1-pentene, isobutylene, 4-methyl-1-pentene, isoprene, 1-hexene, 1,3-hexadiene, 1,4-hexadiene and 1-heptene.

## Patentansprüche

1. Die Polyamidzusammensetzungen für Außenmaterial von Automobilen, die in Gewichtsprozenten (Gew.-%) umfassen:
(a) 30-90 Gew.-% kristallines Polyamid,
(b) 3-50 Gew.-% amorphes Polyamid,
(c) 5-30 Gew.-% thermoplastisches Elastomer, und
(d) 0,1-10 Gew.-% Fluorpolymer, bezogen auf ein Gesamtgewicht von 100 Gew.-% für die Komponenten (a) bis (d).

2. Die Polyamidzusammensetzung wie in Anspruch 1 definiert, wobei das obige kristalline Polyamid ist ein Polyamid-Copolymer, hergestellt durch Kondensation einer oder mehrerer Komponenten, ausgewählt aus C₆-C₁₅ aliphatischen Diaminen und C₆-C₁₅ aliphatischen Dicarbonsäuren und/oder C₆-C₁₅ Lactam oder Aminosäure, oder eine Mischung von Polyamiden, und wobei es mehr als 80 Gew.-% Hexamethylendiamin und Adipinsäure enthält.

3. Die Polyamidzusammensetzungen wie in Anspruch 1 bis 2 definiert, wobei das obige amorphe Polyamid erhalten wird durch Kondensation von Komponenten, ausgewählt aus C₆-C₁₅ aliphatischen Diamin, alizyklischen Diamin der folgenden Formel (I), C₆-C₁₅ aliphatischer Dicarbonsäure, Isophthalsäure, Terephthalsäure und C₆-C₁₅ Lactam und/oder Aminosäure, und wobei es mehr als 5 Mol% der Formel (I), Isophthalsäure oder Terephthalsäure enthält. 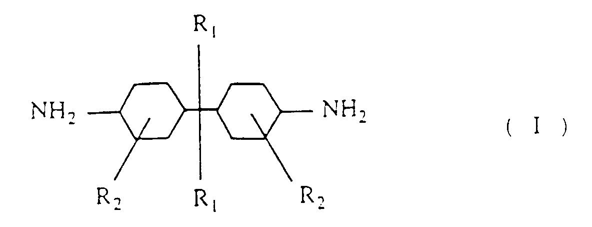 worin R₁ und R₂ Wasserstoff oder C₁-C₃ Alkylgruppen sind.

4. Die Polyamidharzzusammensetzung wie in Anspruch 1 bis 3 definiert, wobei das thermoplastische Polymer erhalten wird durch Additionspolymerisation von Ethylen und einem oder mehreren, ausgewählt aus der Gruppe, bestehend aus C₃-C₈ Olefinen oder Acrylsäuren oder deren Derivaten, Vinylmonomeren und Dienmonomeren, entsprechend weniger als 10 Mol%,

5. Die Polyamidzusammensetzungen wie in Anspruch 1 bis 4 definiert, worin das Fluorpolymer erhalten wird durch Additionspolymerisation von 40-100 Gew.-% von Fluorverbindungen, von denen eine oder mehrere ausgewählt werden aus der Gruppe der Verbindungen der folgenden Strukturformel (II) und 60-0 Gew.-% Olefinverbindungen, von denen eine oder mehrere ausgewählt werden aus der Gruppe der C₂-C₈ Olefine. 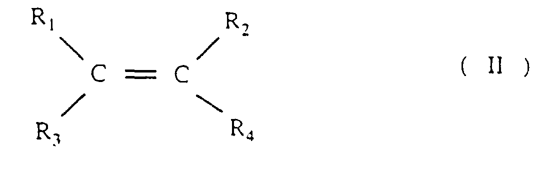 worin
R₁, R₂ und R₃ H oder F sind;
R₄ F, Cl, CF₃ oder CF₂CF₃ ist; und
wenigstens eine Fluorgruppe unter R₁, R₂, R₃ und R₄ sein sollte.

6. Die Polyamidzusammensetzungen wie in Anspruch 5 definiert, worin die Olefinverbindungen ausgewählt werden aus der Gruppe, die aus Ethylen, Propylen, Butylen, Butadien, 1-Penten, Isobutylen, 4-Methyl-1-penten, Isopren, 1-Hexen, 1,3-Hexadien, 1,4-Hexadien und 1-Hepten besteht.

## Revendications

1. Compositions de polyamide pour matériel extérieur pour automobiles comprenant :
(a) 30-90% en poids d'un polyamide cristallin;
(b) 3-50% en poids d'un polyamide amorphe;
(c) 5-30% en poids d'un élastomère thermoplastique; et
(d) 0,1-10% en poids d'un fluoropolymère, par rapport à un poids total de 100% des constituants (a) à (d).

2. Compositions de polyamide selon la revendication 1, dans lesquelles le polyamide cristallin ci-dessus est un copolymère de type polyamide préparé par condensation d'un ou plusieurs constituants choisis parmi les diamines aliphatiques en C₆-C₁₅ et les acides dicarboxyliques aliphatiques en C₆-C₁₅ et/ou les lactame ou aminoacide en C₆-C₁₅, ou un mélange de polyamides, et comprend plus de 80% en poids d'hexaméthylènediamine et d'acide adipique.

3. Compositions de polyamide selon la revendication 1 ou 2, dans lesquelles ledit polyamide amorphe est obtenu par condensation de constituants choisis parmi une diamine aliphatique, une diamine alicyclique de formule I ci-dessous, en C₆-C₁₅, un acide dicarboxylique aliphatique en C₆-C₁₅, l'acide isophtalique, l'acide térephtalique et un lactame ou un aminoacide en C₆-C₁₅, et comprend plus de 5% en moles d'un composé de formule I, d'acide isophtalique ou d'acide térephtalique 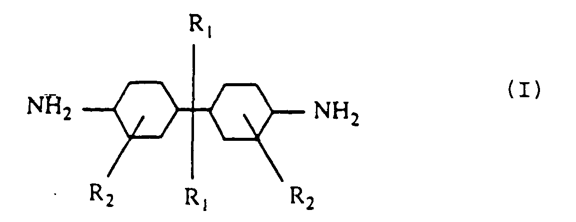 dans laquelle R₁ et R₂ représentent un atome d'hydrogène ou un groupe alkyle en C₁-C₃.

4. Composition de résine de polyamide selon l'une des revendications 1 à 3 dans laquelle ledit élastomère thermoplastique est obtenu par une polyaddition d'éthylène et d'un ou plusieurs constituants choisis parmi les oléfines en C₃-C₈ ou les acides acryliques ou leurs dérivés, les monomères vinyliques, et, les monomères de type diène représentent moins de 10% en mole.

5. Compositions de polyamide selon l'une quelconque des revendications 1 à 4 dans lesquelles ledit fluoropolymère est obtenu par polyaddition de 40-100% en poids de composés fluorés dont un ou plusieurs sont choisis dans le groupe constitué des composés de formule développée (II) ci-dessous et, de 60-0% en poids de composés oléfiniques dont un ou plusieurs sont choisis dans le groupe des oléfines en C₂-C₈ 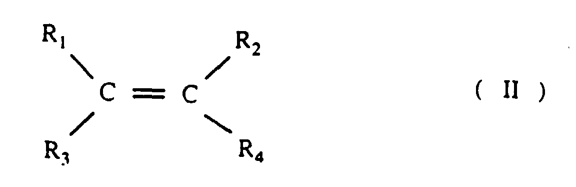 dans laquelle
R₁, R₂ et R₃ sont un atome d'hydrogène ou un atome de fluor;
R₄ est un atome de fluor, un atome de chlore, un groupe CF₃ ou CF₂CF₃; et
au moins l'un de R₁, R₂, R₃ et R₄ est un groupe fluoré.

6. Compositions de polyamide selon la revendication 5, dans lesquelles lesdits composés oléfiniques sont choisis parmi le groupe constitué de l'éthylène, du propylène, du butylène, du butadiène, du 1-pentène, de l'isobutylène, du 4-méthyl-1-pentène, de l'isoprène, du 1-hexène, du 1,3-hexadiène, du 1,4-hexadiène et du 1-heptène.
